# EUROPEAN PATENT APPLICATION

(11) **EP 4 631 921 A1**
(43) Date of publication of application: **15.10.2025**
(21) Application number: 23900751.1
(22) Date of filing: 08.12.2023
(51) Int. Cl.: C03C 17/32, B32B 17/10, B32B 27/00, B32B 27/30, B32B 27/32, B32B 27/36, B44C 1/17, C03C 17/34, G09F 9/00

(54) **COLORED LAYER-EQUIPPED GLASS SUBSTRATE, COVER GLASS, DISPLAY DEVICE, AND METHOD FOR MANUFACTURING COLORED LAYER-EQUIPPED GLASS SUBSTRATE**

(30) Priority: 09.12.2022 JP 2022197301; 28.12.2022 JP 2022212353
(71) Applicant: AGC INC., Chiyoda-ku, Tokyo 1008405 (JP)
(72) Inventor: WAKABAYASHI, Hirokazu, Tokyo 100-8405 (JP); KAKUTA, Junichi, Tokyo 100-8405 (JP); FUJII, Yuki, Tokyo 100-8405 (JP); HASHIMOTO, Yohei, Tokyo 100-8405 (JP); ARATA, Kenji, Tokyo 100-8405 (JP); MITSUDA, Takehiro, Tokyo 100-8405 (JP)
(74) Representative: Müller-Boré & Partner Patentanwälte PartG mbB
(86) International application number: PCT/JP2023/044039
(87) International publication number: WO 2024/122639

(57) **Abstract**

The present invention provides a colored layer-equipped glass substrate that includes: a glass substrate having a main surface; and a colored layer disposed contacting the main surface. The colored layer includes: a colorant; a cured resin; and a non-curable resin. Furthermore, the present invention provides a method for manufacturing a colored layer-equipped glass substrate which includes a glass substrate having a main surface, and a colored layer disposed contacting the main surface, the method including: preparing a glass substrate having a main surface; preparing a transfer member having a transfer base material and a colored layer precursor film; laminating the transfer member on the glass substrate such that the main surface of the glass substrate and the colored layer precursor film contact each other; and forming the colored layer by curing the colored layer precursor film disposed contacting the main surface of the glass substrate. The colored layer precursor film includes: a colorant; a curable resin; and a non-curable resin.

## Description

### TECHNICAL FIELD

The present invention relates to a colored layer-attached glass substrate, a cover glass, a display device, and a method for producing a colored layer-attached glass substrate.

### BACKGROUND ART

In the related art, as a cover glass for a display in a display device, there has been known a colored layer-attached glass substrate in which a colored layer (light-shielding portion) for shielding wiring or the like around the display is provided on one main surface of a glass substrate. In recent years, in a display such as an in-vehicle display device, a design having a curved surface may be adopted for the purpose of improving visibility and designability, and accordingly, there is an increasing demand for a cover glass having a curved surface.

Patent Literature 1 describes an invention related to a curved screen-printing device and a curved screen-printing method for printing a predetermined pattern on a plate-like substrate having a curved surface.

Patent Literature 2 describes an invention related to a decorative layer-attached transparent plate, including a transparent plate made of a material that transmits visible light and having two main surfaces, and a decorative layer provided on one main surface.

### CITATION LIST

### PATENT LITERATURE

Patent Literature 1: WO 2020/162469
Patent Literature 2: JP2019-010871A

### SUMMARY OF INVENTION

### TECHNICAL PROBLEM

The inventors of the present invention have developed a new method of forming a colored layer by using a transfer decoration method as a method of providing a colored layer as a light-shielding portion on a cover glass to deal with a more complicated shape of a display. It has been found that, in the case where the colored layer is formed by using the transfer decoration method, durability of the formed colored layer is a problem.

Therefore, an object of the present invention is to provide a colored layer-attached glass substrate, a cover glass, and a display device, having a colored layer having excellent durability. Another object of the present invention is to provide a method for producing a colored layer-attached glass substrate having a colored layer having excellent durability, by using a transfer decoration method.

### SOLUTION TO PROBLEM

As a result of intensive studies, the inventors of the present invention have found that the above problems can be solved by the following configuration.
[1] A colored layer-attached glass substrate including: a glass substrate having a main surface; and a colored layer disposed in contact with the main surface, in which the colored layer contains a colorant, a cured resin, and a non-curable resin.
[2] The colored layer-attached glass substrate according to [1], in which the cured resin is a cured product of a curable resin and a curing agent.
[3] The colored layer-attached glass substrate according to [2], in which the curing agent is a thermal curing agent or a photocuring agent.
[4] The colored layer-attached glass substrate according to [2], in which the curing agent is a thermal curing agent.
[5] The colored layer-attached glass substrate according to any one of [2] to [4], in which the curing agent contains a blocked isocyanate.
[6] The colored layer-attached glass substrate according to any one of [2] to [5], in which the colored layer further contains at least one selected from the group consisting of methyl ethyl ketoxime, diethyl malonate, epsilon-caprolactam, 3,5-dimethylpyrazole, and acetoxime.
[7] The colored layer-attached glass substrate according to [4], in which a curing temperature of the thermal curing agent is 80°C to 200°C.
[8] The colored layer-attached glass substrate according to any one of [1] to [7], in which the non-curable resin contains a tackifier.
[9] The colored layer-attached glass substrate according to any one of [2] to [4] and [7], in which the non-curable resin contains a tackifier, and a content of the tackifier is more than 0 mass% and 150 mass% or less with respect to a content of the curable resin.
[10] The colored layer-attached glass substrate according to any one of [2] to [4], [7], and [9], in which the curable resin includes at least one selected from the group consisting of an acrylic resin, a polyester resin, and an epoxy resin.
[11] The colored layer-attached glass substrate according to any one of [2] to [4], [7] and [9], in which the curable resin includes an acrylic resin.
[12] A colored layer-attached glass substrate including: a glass substrate having a main surface; and a colored layer disposed in contact with the main surface, in which the amount of a non-cured component extracted from the colored layer is 5 mass% or more and 40 mass% or less, as measured by using an extraction test to be described later.
[13] The colored layer-attached glass substrate according to [12], in which the amount of the non-cured component extracted from the colored layer is 10 mass% or more and 25 mass% or less.
[14] The colored layer-attached glass substrate according to [12], in which the amount of the non-cured component extracted from the colored layer is 10 mass% or more and 19 mass% or less.
[15] The colored layer-attached glass substrate according to any one of [1] to [14], in which the colored layer has a thickness of 5 µm to 20 µm.
[16] The colored layer-attached glass substrate according to any one of [1] to [15], which satisfies the requirement 1 and the requirement 2 to be described later.
[17] The colored layer-attached glass substrate according to any one of [1] to [16], in which when the colored layer-attached glass substrate is observed from a glass substrate side, no air bubbles are observed between the glass substrate and the colored layer.
[18] The colored layer-attached glass substrate according to any one of [1] to [17], in which the colored layer-attached glass substrate has an opening in which the colored layer is not disposed on the main surface of the glass substrate, and a slope of an end portion of the colored layer adjacent to the opening is 0.1 or more.
[19] The colored layer-attached glass substrate according to any one of [1] to [18], in which at least a part of a region on the main surface where the colored layer is disposed is a curved surface.
[20] A cover glass for a display, the cover glass including: the colored layer-attached glass substrate according to any one of [1] to [19], in which the colored layer has an opening, and at least one layer selected from the group consisting of an anti-glare layer, an anti-reflection layer, and an antifouling layer is laminated on a main surface of the glass substrate opposite to the main surface where the colored layer is disposed.
[21] A display device including: the cover glass according to [20]; and a display, in which a main surface of the cover glass on a colored layer side faces the display.
[22] A method for producing a colored layer-attached glass substrate including a glass substrate having a main surface, and a colored layer disposed in contact with the main surface, the method including: preparing the glass substrate having a main surface; preparing a transfer member including a transfer substrate and a colored layer precursor film; laminating the transfer member on the glass substrate such that the main surface of the glass substrate is in contact with the colored layer precursor film; and curing the colored layer precursor film disposed in contact with the main surface of the glass substrate to form the colored layer, in which the colored layer precursor film contains a colorant, a curable resin, and a non-curable resin.
[23] The method for producing a colored layer-attached glass substrate according to [22], in which the colored layer precursor film further contains a curing agent.
[24] The method for producing a colored layer-attached glass substrate according to [23], in which the curing agent is a thermal curing agent, after the transfer member is laminated on the glass substrate, the colored layer precursor film is heated at a temperature equal to or higher than a curing temperature of the thermal curing agent to cure the colored layer precursor film, and the curing temperature of the thermal curing agent is 80°C to 200°C.
[25] The method for producing a colored layer-attached glass substrate according to [23] or [24], in which the content of the curing agent is 0.5 mass% to 30 mass% with respect to the colored layer precursor film.
[26] The method for producing a colored layer-attached glass substrate according to any one of [22] to [25], in which the prepared glass substrate and the transfer member are installed in a chamber such that the main surface of the glass substrate faces the colored layer precursor film, the chamber is divided by the transfer member into a first space including the glass substrate and a second space not including the glass substrate, the transfer substrate is heated and softened, and an air pressure in the first space is set lower than an air pressure in the second space to bring the colored layer precursor film into contact with the main surface of the glass substrate.
[27] The method for producing a colored layer-attached glass substrate according to any one of [22] to [26], in which a part of the colored layer disposed on the main surface of the glass substrate is irradiated with laser light to remove the colored layer irradiated with the laser light.

### ADVANTAGEOUS EFFECTS OF INVENTION

According to the present invention, it is possible to provide a colored layer-attached glass substrate, a cover glass, and a display device, having a colored layer having excellent durability. According to the present invention, it is also possible to provide a method for producing a colored layer-attached glass substrate having a colored layer having excellent durability, by using a transfer decoration method.

### BRIEF DESCRIPTION OF DRAWINGS

[FIG. 1] is a cross-sectional view illustrating an example of a configuration of a laminate including a colored layer-attached glass substrate.
[FIG. 2A] is a cross-sectional view illustrating an example of a structure of a glass substrate included in the colored layer-attached glass substrate.
[FIG. 2B] is a cross-sectional view illustrating an example of the structure of the glass substrate included in the colored layer-attached glass substrate.
[FIG. 2C] is a cross-sectional view illustrating an example of the structure of the glass substrate included in the colored layer-attached glass substrate.
[FIG. 3] is a plan view illustrating an example of a configuration of the colored layer-attached glass substrate.
[FIG. 4] is a graph showing an example of a structure in the vicinity of an end portion of a colored layer.
[FIG. 5] is a schematic diagram illustrating an example of a configuration of a laser irradiation device that irradiates a part of the colored layer with laser light.
[FIG. 6] is a cross-sectional view illustrating an example of a configuration of a display device.

### DESCRIPTION OF EMBODIMENTS

Hereinafter, the present invention is described with reference to the drawings. However, the present invention is not limited to the following embodiments. Various modifications and substitutions can be made in the following embodiments without departing from the scope of the present invention.

The terms used in the present description have the following meanings.

A numerical range represented by using "to" means a range including numerical values described before and after "to" as a lower limit value and an upper limit value. In a numerical range described in stages in the present description, an upper limit value or a lower limit value described in a certain numerical range may be replaced with an upper limit value or a lower limit value of another numerical range described in stages. In addition, in a numerical range described in the present description, an upper limit value or a lower limit value described in a certain numerical range may be replaced with values described in Examples.

In the present description, each component may be used alone or in combination of two or more substances corresponding to the component. Here, in the case where two or more types of substances are used in combination for each component, a content of the component refers to a total content of the combined substances unless otherwise specified.

In the present description, a combination of two or more preferred embodiments is a more preferred embodiment.

The term "unit" is a general term for an atomic group based on one molecule of a monomer that is formed directly by polymerization of the monomer, and an atomic group obtained by chemically converting a part of the above atomic group. The term "content (mol%) of each unit with respect to all units included in a polymer" can be determined by analyzing the polymer by using a nuclear magnetic resonance spectrum method, and can also be determined based on the charged amount of a component used in the production of the polymer.

The term (meth)acrylic is a general term for acrylic and methacrylic.

The term "glass transition point (Tg)" is an intermediate point glass transition point of the polymer measured by using differential scanning calorimetry (DSC).

The terms "number average molecular weight (Mn)" and "weight average molecular weight (Mw)" are values measured by size exclusion chromatography (gel permeation chromatography) using polystyrene as a standard substance. The term "ratio of Mw to Mn" represents a molecular weight distribution and is also referred to as Mw/Mn.

The term "transparent" means that an average transmittance of visible light (wavelength: 400 nm to 700 nm) is 80% or more.

The term "flat region" means a portion having an average radius of curvature of more than 10,000 mm.

The term "curved region" means a portion having an average radius of curvature of 10,000 mm or less.

### [Colored Layer-attached Glass Substrate]

Hereinafter, a colored layer-attached glass substrate according to the present invention is described with reference to the drawings.

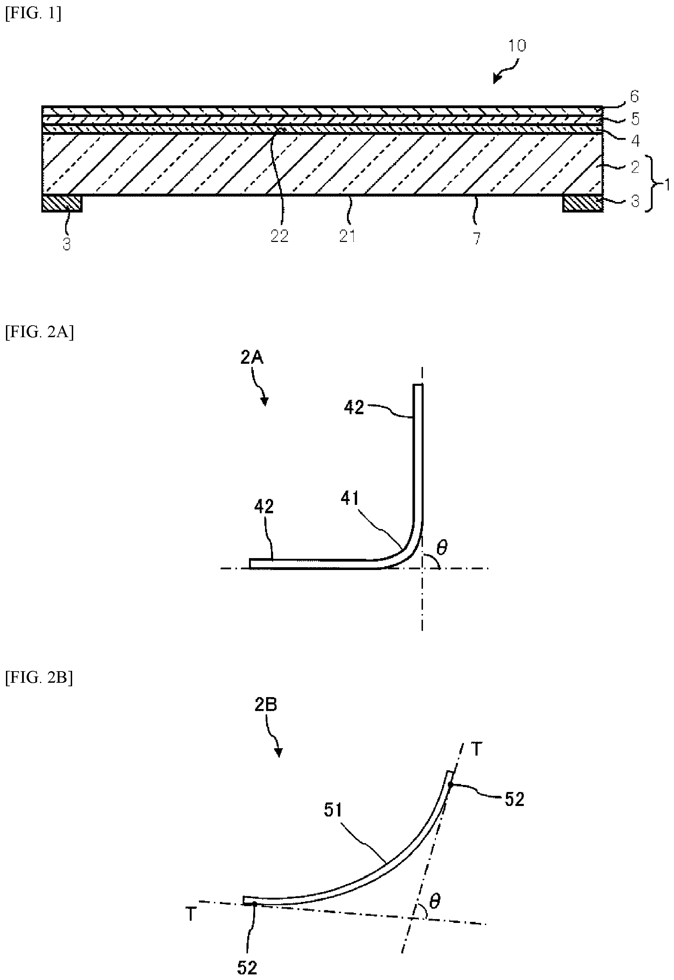

FIG. 1 is a cross-sectional view illustrating an example of a configuration of the colored layer-attached glass substrate according to the present invention. FIG. 1 illustrates a laminate 10 including a glass substrate 2, a colored layer 3, an AG layer 4, an AR layer 5, and an AFP layer 6 in this order. A colored layer-attached glass substrate 1 includes the glass substrate 2 and the colored layer 3 disposed in contact with a first main surface 21 of the glass substrate 2. The glass substrate 2 has the first main surface 21 and a second main surface 22 that is the other main surface opposed to the first main surface 21. The AG layer 4, the AR layer 5, and the AFP layer 6 are disposed on a second main surface 22 side of the glass substrate 2.

In FIG. 1, the colored layer 3 is disposed in contact with a part of the first main surface 21 of the glass substrate 2, and an opening 7 is formed in a portion of the first main surface 21 where the colored layer 3 is not disposed. In the case where the laminate 10 is mounted on a display device, the first main surface 21 of the glass substrate 2 where the colored layer 3 is disposed faces the display device, and the second main surface 22 faces an observer.

The laminate including the colored layer-attached glass substrate is not limited to the embodiment illustrated in FIG. 1. For example, the laminate may not include any layer of the AG layer, the AR layer, and the AFP layer. The laminate including the colored layer-attached glass substrate may include a functional layer other than the AG layer, the AR layer, and the AFP layer.

### [First Embodiment]

A colored layer-attached glass substrate according to a first embodiment of the present invention is a colored layer-attached glass substrate including: a glass substrate having a main surface; and a colored layer disposed in contact with the main surface of the glass substrate, in which the colored layer contains a cured resin and a non-curable resin.

Hereinafter, each member included in the colored layer-attached glass substrate according to the present embodiment is described in detail.

### <Glass Substrate>

The glass substrate is a transparent glass member and has at least one main surface.

The glass substrate is formed of a general glass. Examples of glass forming the glass substrate include an alkali-free glass, a soda lime glass, a soda lime silicate glass, an aluminosilicate glass, a borosilicate glass, a lithium aluminosilicate glass, and a borosilicate glass. Among them, an aluminosilicate glass or a lithium aluminosilicate glass is preferred since even in the case where the thickness is small, a large stress is likely to enter by a strengthening treatment, and a high strength glass can be obtained.

In particular, in the case where the glass substrate is subjected to a chemical strengthening treatment to be described later, a glass series for chemical strengthening based on an aluminosilicate glass (for example, "Dragontrail (registered trademark)") is suitably used.

The shape of the glass substrate may be a flat shape as illustrated in FIG. 1, or may be a shape having one or more bent portions or curved portions as illustrated in FIGS. 2A to 2C to be described later.

The entire main surface of the glass substrate may be a flat surface, or at least a part thereof may be a curved surface. In the case where at least a part of the main surface is a curved surface, the entire main surface may be formed of a curved surface, or the main surface may be formed of a curved surface portion and a flat surface portion.

The glass substrate may have any of a polygonal shape including a rectangular shape, a flat plate shape such as a circular shape and an elliptical shape, a shape in which a part or all of these shapes are curved, and a three-dimensional shape.

The entire region on the main surface where the colored layer is disposed may be a flat surface, or at least a part of the region may be a curved surface. The region where the colored layer is disposed may be entirely formed of a curved surface or may be formed of a curved surface and a flat surface. The colored layer disposed on the curved surface deforms following the shape of the curved surface.

In the case where a glass substrate having a main surface at least partially having a curved surface is used as a cover glass of an automobile interior member, a display device, or the like, portions disposed on the display surface are appropriately bent, thereby reducing a viewing angle from a user and improving visibility.

Note that, the "curved surface" of the main surface means a region having the following first radius of curvature R₁ of 10,000 mm or less.

The first radius of curvature R₁ of the curved surface is determined as follows. In a tangential direction at an arbitrary point P on the curved surface, a tangential direction selected to satisfy the following conditions is defined as an X direction, a tangential direction orthogonal to the X direction is defined as a Y direction, and a normal direction of the main surface is defined as a Z direction. The X direction is a tangential direction orthogonal to the Z direction in a plane that has a minimum radius of curvature of the main surface in a plane passing through the point P and including the Z direction. In the case where there are a plurality of directions in which the first radius of curvature R₁ is minimum, the first radius of curvature R₁ is determined with at least one of the directions as the X direction.

The first radius of curvature R₁ of the curved surface can be appropriately set according to the application, the type, and the like of the glass substrate. The first radius of curvature R₁ is preferably 1 mm or more, more preferably 50 mm or more, still more preferably 100 mm or more, and even more preferably 200 mm or more. The first radius of curvature R₁ of the curved surface is 10,000 mm or less, preferably 5,000 mm or less, and more preferably 3,000 mm or less.

The curved surface forming at least a part of the main surface of the glass substrate may be bent or curved only in the X direction, or may have a double-curved shape bent or curved in the X direction and a tangential direction other than the X direction (for example, the Y direction). In the case where the main surface is bent or curved in the tangential direction other than the X direction, the radius of curvature is preferably 1 mm to 10,000 mm, more preferably 50 mm to 5,000 mm, still more preferably 100 mm to 3,000 mm, and particularly preferably 200 mm to 3,000 mm.

The radius of curvature of the curved surface of the glass substrate may be the same or different in any direction and position in the plane.

For the shape of the glass substrate, WO 2022/070611 can be referred to.

In particular, at least a part of the region on the glass substrate where the colored layer is disposed preferably has a double-curved shape, or a shape bent or curved only in the X direction and having a bending angle of 45° or more in the X direction.

In the case where the shape of the glass substrate is the above shape, it is difficult to form (print) a colored layer by screen-printing or inkjet-printing, which is a conventional method of forming a colored layer in a cover panel of a display device. In contrast, with the method for producing a colored layer-attached glass substrate using the transfer decoration method according to the present embodiment, a colored layer having excellent durability can be formed on the glass substrate having the above shape, and a high quality cover panel can be provided.

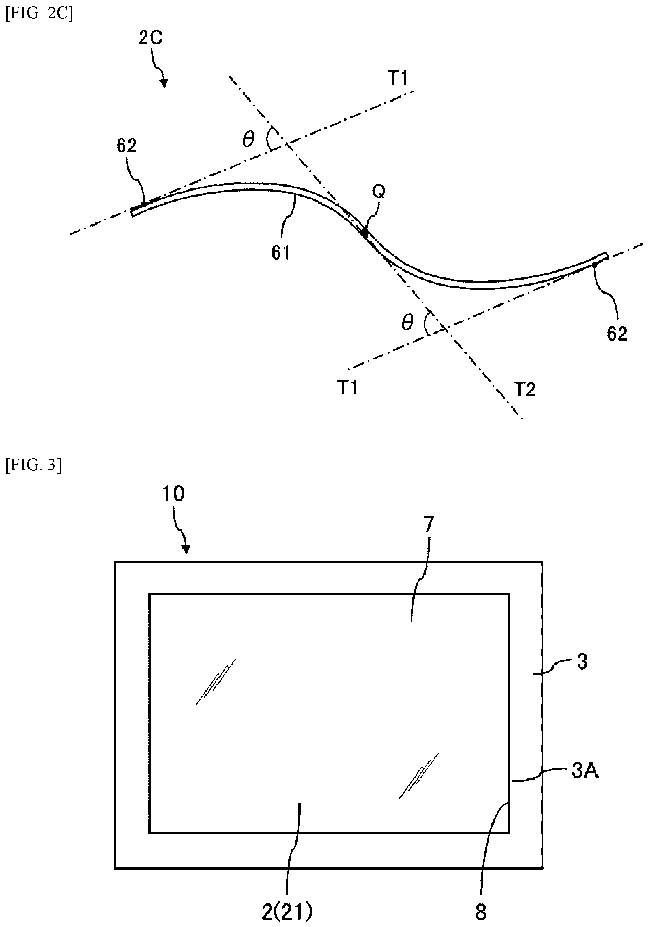

The bending angle is defined as follows based on a cross-sectional shape of the glass substrate including the bending direction of the X direction or the like. FIGS. 2A to 2C are each a cross-sectional view illustrating an example of a structure of the glass substrate included in the colored layer-attached glass substrate, and each illustrates a cross-sectional shape of the glass substrate along the X direction. In the case where there are a plurality of bending angles in the X direction according to the following definitions, a shape in which at least one bending angle is 45 degrees or more is preferred.
(i) The cross-sectional shape of a glass substrate 2A illustrated in FIG. 2A is a shape (V shape) including a curved portion 41 having no inflection point and two flat surface portions 42 disposed to sandwich the curved portion 41. In the case of such a shape, an angle formed by one flat surface portion 42 and the other flat surface portion 42 is defined as a bending angle θ.
(ii) The cross-sectional shape of a glass substrate 2B illustrated in FIG. 2B is a shape (U shape) in which no flat surface portion is present and a curved portion 51 has no inflection point. In the case of such a shape, at each of both ends of the glass substrate 2B, a tangent line T is drawn at a midpoint 52 between an end and a curvature change point closest to the end, and the angle formed by the two tangent lines T is defined as the bending angle θ.
(iii) In the case where the cross-sectional shape of the glass substrate is a shape including one flat surface portion and a curved portion that is curved along the in-plane direction (X direction) and that has no inflection point, when a tangent line T is drawn at a midpoint between an end on the curved portion side and a curvature change point closest to the end, an angle formed by the flat surface portion and the tangent line T is defined as the bending angle θ.
(iv) The cross-sectional shape of a glass substrate 2C illustrated in FIG. 2C is a shape (S shape) having no flat surface portion and including a curved portion 61 in which an inflection point Q is present in the in-plane direction (X direction). In the case of such a shape, at one end portion of the glass substrate 2C, a tangent line T1 is drawn at a midpoint 62 between an end and a curvature change point closest to the end, a tangent line T2 is drawn at the inflection point Q, and an angle by the tangent line T1 and the tangent line T2 is defined as the bending angle θ.
(v) In the case where the cross-sectional shape of the glass substrate is a shape including a flat surface portion and a curved portion having the inflection point Q, an angle formed by the tangent line T at the inflection point Q and the flat surface portion is defined as the bending angle θ.

Note that, the "flat surface portion" means a region having a radius of curvature R₁ of more than 10,000 mm in the cross section, and the "curved portion" means a region having a radius of curvature R₁ of 10,000 mm or less in the cross section.

In addition, the "curvature change point" means a point where a change in radius of curvature R at each position in a section having a length of 50 mm or less is more than 5%.

In the case where the glass substrate is a plate-shaped member having two opposite main surfaces, the thickness of the glass substrate is preferably 0.2 mm to 5.0 mm, more preferably 0.8 mm to 3.0 mm, and still more preferably 1.0 mm to 2.5 mm. In the case where the thickness is within this range, it is possible to achieve both weight reduction and the strength of the glass substrate, and it is possible to improve designability in the case of using the colored layer-attached glass substrate as a cover panel in an in-vehicle display device.

Dimensions of the glass substrate can be appropriately selected depending on the application. In the case of using the colored layer-attached glass substrate as a cover glass in an in-vehicle display device, the length of a short side of the glass substrate is, for example, 50 mm to 500 mm, and preferably 100 mm to 300 mm, and the length of a long side of the glass substrate is, for example, 50 mm to 1,500 mm, and preferably 100 mm to 1,200 mm.

The shape, the size, and the like of the glass substrate when observed from the normal direction of the main surface (in a plan view) are appropriately determined according to, for example, a display of the display device on which the colored layer-attached glass substrate is to be mounted.

The glass substrate is preferably strengthened by a chemical strengthening treatment. In the case of performing a chemical strengthening treatment, a glass for chemical strengthening is used as the glass type.

As a method of the chemical strengthening treatment, typically, a method of immersing a glass substrate formed into a predetermined shape in a molten salt containing an alkali metal such as KNO₃, subjecting the glass substrate to an ion exchange treatment, and then cooling the glass substrate to the vicinity of room temperature is exemplified. Treatment conditions such as a temperature of the molten salt and an immersion time may be set such that a surface compressive stress (CS) of a compressive stress layer and a thickness (DOL) of the compressive stress layer have desired values.

The surface compressive stress (CS) of the compressive stress layer is preferably 500 MPa or more, more preferably 600 MPa or more, and still more preferably 700 MPa or more. On the other hand, the CS is preferably 1300 MPa or less.

The thickness (DOL) of the compressive stress layer is preferably 10 µm or more, more preferably 15 µm or more, still more preferably 20 µm or more, and particularly preferably 25 µm or more. In addition, the DOL is preferably 50 µm or less, and more preferably 40 µm or less.

### <Colored Layer>

The colored layer is a layer disposed in contact with the main surface of the glass substrate, and contains at least a colorant, a cured resin, and a non-curable resin.

Note that, the expression "contact" in the "layer disposed in contact with the main surface of the glass substrate" means that no adhesive layer is present between the main surface of the glass substrate and the colored layer.

FIG. 3 is a plan view illustrating an example of a configuration of the colored layer-attached glass substrate. In FIG. 3, the colored layer-attached glass substrate 1 is observed from the normal direction of the first main surface 21 of the glass substrate 2 (a side where the colored layer 3 is disposed).

The colored layer 3 is disposed close to a peripheral edge portion of the first main surface 21. Here, the peripheral edge portion of the first main surface 21 means a strip-shaped region extending from an outer peripheral end of the first main surface 21 toward a central portion of the first main surface 21. The colored layer 3 is disposed over the entire circumference of the peripheral edge portion of the first main surface 21, and the opening 7 is a region in the central portion of the first main surface 21 surrounded by the colored layer 3.

In FIG. 3, a boundary line 8 is a boundary between the colored layer 3 and the opening 7 observed from the normal direction of the first main surface 21 of the glass substrate 2.

The end portion 3A illustrated in FIG. 3 is a region of the colored layer 3 adjacent to the opening 7. Specifically, the end portion 3A refers to a continuous region in the colored layer 3 from the boundary line 8 to a position where the thickness of the colored layer 3 (distance from the first main surface 21 to a surface opposite to the glass substrate 2) reaches 95% of the average thickness of the colored layer 3.

By disposing the colored layer and the opening in this manner, in a display device including the colored layer-attached glass substrate as a cover glass, display of the display is visually recognized by the observer through the opening, while members such as a wiring member around the display are concealed by the colored layer so as not to be visually recognized by the observer.

The shape of the colored layer may be a shape other than the shape illustrated in FIG. 3. For example, the colored layer may be disposed in a part of the peripheral edge portion of the main surface of the glass substrate. The colored layer may not be in contact with the outer peripheral end of the main surface of the glass substrate.

In the case where the colored layer has a strip shape, the width of the colored layer in the in-plane direction may not be constant. The shape of the colored layer is not limited to a strip shape, and the shape and the size of the colored layer can be appropriately set according to the purpose. Although the entire circumference of the opening 7 illustrated in FIG. 3 is surrounded by the colored layer 3 in the in-plane direction, any region may be regarded as an opening as long as it is a region on the main surface of the glass substrate where the colored layer is not disposed. The opening may be in contact with the outer peripheral end of the glass substrate in one or more sections in the in-plane direction. For example, the opening may be a region sandwiched by strip-shaped colored layers disposed along two facing sides of the main surface of a rectangular glass substrate, and may be a region in contact with the outer peripheral end of the glass substrate at the remaining two facing sides.

As described above, in the display device using the colored layer-attached glass substrate as the cover glass, the colored layer can shield members such as a wiring circuit disposed around the display from the visual field of the observer, and improve the visibility of the display and aesthetics. The colored layer may be formed to improve the designability of the display device, and may also function as a decorative layer including characters, patterns, and the like.

Hereinafter, each component included in the colored layer is described in detail.

### (Colorant)

The colorant may be either a pigment or a dye. A colorant having an appropriate color can be used depending on the purpose of the colored layer. For example, in the case of forming a colored layer used as a light shielding film, a black colorant may be used, or a plurality of colorants having different colors may be mixed and used to form a pattern such as a woodgrain pattern.

The colorant is preferably a pigment. For example, in the case where the colored layer is black, a black pigment is preferred as the colorant. Examples of the black pigment include carbon black, titanium black, titanium carbon, iron oxide, titanium oxide, and graphite. Graphite or carbon black is preferred, and carbon black is more preferred.

The colorant may be used alone or in combination of two or more types thereof.

The content of the colorant is preferably 20 mass% to 75 mass% and more preferably 30 mass% to 70 mass% with respect to a total amount of the colored layer.

### (Cured Resin)

The colored layer contains a cured resin.

The cured resin means a cured product obtained by curing a curable resin.

The cured resin may be a cured product of a curable resin and a curing agent, or may be a cured product (polycondensate) obtained by reacting a curable resin with heat, light, an acid, an alkali, or the like.

The cured resin is preferably a cured product of a curable resin and a curing agent.

### -Curable Resin-

Examples of the curable resin include an acrylic resin, a polyester resin, an epoxy resin, a urethane resin, a polyamide resin, a phenol resin, and a urea resin. Among them, a resin selected from the group consisting of an acrylic resin, a polyester resin, and an epoxy resin is preferred, and an acrylic resin is more preferred since a colored layer is easily removed by laser-trimming to be described later and the glass substrate after removal of the colored layer has excellent transparency (hereinafter, also referred to as an "excellent laser-trimming property").

The acrylic resin is a polymer having a unit derived from a (meth)acrylate. The acrylic resin may have a reactive group such as a carboxy group, a hydroxy group, a sulfo group, or an epoxy group.

The acrylic resin may be a compound having one or more (meth)acryloyl groups and having a reactive group such as a carboxy group, a hydroxy group, a sulfo group, or an epoxy group.

The reactive group is preferably a group capable of reacting with an isocyanate group (for example, a carboxy group, a hydroxy group, or an epoxy group).

The polyester resin is a polymer in which a unit derived from a polycarboxylic acid and a unit derived from a polyhydric alcohol are linked by an ester bond. The polyester resin may have a unit other than the above two units (for example, a unit derived from a hydroxycarboxylic acid compound).

Examples of the polycarboxylic acid include an aromatic polycarboxylic acid and an aliphatic polycarboxylic acid. As the polycarboxylic acid, an aromatic polycarboxylic acid is preferably used, and it is more preferable to use both an aromatic polycarboxylic acid and an aliphatic polycarboxylic acid. The number of carbon atoms in the polycarboxylic acid is preferably 8 to 15. The number of carboxy groups in the polycarboxylic acid is preferably 2 to 4, and more preferably 2.

The polyhydric alcohol is preferably a polyhydric alcohol having 2 to 10 of carbon atoms. The number of hydroxy groups in the polyhydric alcohol is preferably 2 to 4, and more preferably 2.

The epoxy resin is a compound having two or more epoxy groups in a molecule. The epoxy resin is preferably an aromatic compound having a glycidyloxy group such as bisphenol A-diglycidyl ether, and an oligomer thereof.

The weight average molecular weight (Mw) of the curable resin is preferably 10,000 to 80,000, and more preferably 15,000 to 50,000.

### -Curing Agent-

Examples of the curing agent include a thermal curing agent and a photocuring agent.

As the curing agent, an appropriate type can be selected depending on the type of the reactive group in the curable resin. The curing agent may be used alone or in combination of two or more types thereof. The colored layer may contain both a thermal curing agent and a photocuring agent.

The thermal curing agent is a curing agent that does not have reactivity with the curable resin at a temperature lower than a predetermined curing temperature, and changes the molecular structure and exhibits reactivity with the curable resin by being heated to the predetermined curing temperature or higher.

The curing agent is preferably a thermal curing agent.

Examples of the thermal curing agent include an isocyanate compound, an aziridine compound, an epoxy compound, a metal chelate compound, an amine compound, an acid anhydride, an imidazole compound, a phenol compound, a phosphorus compound, a sulfonium salt, an azo compound, and an organic peroxide. Among them, an isocyanate compound, an imidazole compound, or a phenol compound is preferred, an isocyanate compound or an imidazole compound is more preferred, and an isocyanate compound is still more preferred.

Examples of the isocyanate compound include polyisocyanates such as tolylene diisocyanate, xylylene diisocyanate, diphenylmethane diisocyanate, hexamethylene diisocyanate, and isophorone diisocyanate, and adducts, biurets, and nurates of these polyisocyanates.

The thermal curing agent is preferably a block compound in which a predetermined blocking agent is bonded to a functional group having reactivity with a reactive group in the curable resin. Such a block compound is prevented from reacting with the curable resin in an environment lower than the curing temperature.

Examples of the block compound include a blocked isocyanate.

The curing agent preferably contains a blocked isocyanate.

As the blocking agent, a compound that can be bonded to the functional group in the thermal curing agent and that can be dissociated from the functional group by being heated to a predetermined curing temperature or higher can be used. Examples thereof include the following compounds.
· Lactam compounds such as ε-caprolactam and δ-valerolactam.
· Oxime compounds such as acetaldoxime, acetone oxime, methyl ethyl ketoxime, and cyclohexanone oxime.
· Pyrazole compounds such as pyrazole and 3,5-dimethylpyrazole.
· Amine compounds such as diphenylaniline, aniline ethyleneimine, and diisopropylamine.
· Activated methylene compounds such as dimethyl malonate, diethyl malonate, methyl acetoacetate, ethyl acetoacetate, and acetylacetone.
· Phenol compounds such as phenol, cresol, and ethylphenol.
· Alcohol compounds such as propylene glycol monomethyl ether, ethylene glycol, benzyl alcohol, methanol, and ethanol.
· Mercaptan compounds such as butyl mercaptan and dodecyl mercaptan.
· Acid amide compounds such as acetanilide and acetic acid amide.

The curing temperature of the thermal curing agent is preferably 80°C to 200°C, more preferably 100°C to 180°C, and still more preferably 110°C to 160°C, since a curing rate is more excellent.

The curing temperature of the thermal curing agent can be measured by using differential scanning calorimetry (DSC) according to a known method. In the case where a thermal curing agent is commercially available, the curing temperature may be a catalog value.

The photocuring agent is a curing agent that is irradiated with light such as ultraviolet rays to change the molecular structure and exhibit reactivity with the curable resin.

Examples of the photocuring agent include a photoradical generator and a photocation generator (photoacid generator) that generates a Bronsted acid or a Lewis acid by light irradiation. Examples of the photoradical generator include an acetophenone compound, a benzophenone compound, and an acylphosphine compound. Examples of the photocation generator include a sulfonium salt compound and an iodonium salt compound.

The content of the curing agent is appropriately adjusted according to the content of the curable resin and the number of reactive groups, and is preferably 0.5 mass% to 30 mass%, more preferably 0.5 mass% to 20 mass%, and still more preferably 0.5 mass% to 10 mass% with respect to the colored layer precursor film to be described later.

In the case where the content of the curing agent is the above-described lower limit value or more, the colored layer is sufficiently cured, and adhesion of the colored layer is more excellent. In addition, in the case where the content of the curing agent is the above-described upper limit value or less, reliability (moisture and heat resistance, boiling resistance, low-temperature resistance, high-temperature resistance, and weather resistance) of the colored layer is more excellent.

### (Non-curable Resin)

The colored layer contains a non-curable resin. Note that, the non-curable resin is a resin component different from the colorant and the cured resin contained in the colored layer.

The weight average molecular weight (Mw) of the non-curable resin is, for example, less than 20,000, preferably 400 to 15,000, and more preferably 500 to 10,000.

The glass transition point (Tg) of the non-curable resin is preferably 30°C to 200°C, more preferably 50°C to 150°C, and still more preferably 60°C to 130°C form the viewpoint of sufficient leveling at an interface with the glass substrate and excellent adhesion to the glass substrate.

From the viewpoint of the adhesion to the glass substrate, the non-curable resin preferably has a functional group selected from the group consisting of a hydroxy group and a carboxy group.

Examples of the non-curable resin include a tackifier, and the non-curable resin preferably contains a tackifier. The colored layer preferably contains a tackifier since the adhesion to the glass substrate is more excellent.

Examples of the tackifier include a rosin-based resin, a terpene-based resin, and a petrochemical resin.

Examples of the rosin-based resin include a rosin resin, a rosin ester resin, a polymerized rosin ester resin, an acid-modified polymerized rosin ester resin, a rosin-modified phenol resin, and a hydride thereof.

Examples of the terpene-based resin include a terpene resin, a terpene phenol resin, an aromatic modified terpene resin, and a hydride thereof.

Examples of the petrochemical resin include an acrylic resin obtained by polymerizing an acrylic monomer as a main component, a styrene resin obtained by polymerizing a styrene-based monomer such as styrene and α-methylstyrene as a main component, a styrene-acrylic resin obtained by copolymerizing an acrylic monomer and a styrene-based monomer, and a hydride thereof.

Note that, the incorporation of a tackifier in the colored layer can be checked by using the following method. In the case where a polar group contained in the above tackifier is detected by a pyrolysis GC-Mass (gas chromatograph mass spectrometer), an NMR (nuclear magnetic resonance) analyzer, or the like in the non-cured component extracted from the colored layer by using the method described in (Extraction Test) to be described later, the colored layer can be regarded as containing a tackifier. Examples of the polar group include an acrylic resin, a hydroxy group, a carbonyl group, and an ester group.

As the tackifier to be contained in the colored layer, an acrylic resin, a styrene-acrylic resin, or a terpene phenol resin is more preferred, since a slope of an end portion of the colored layer becomes closer to a normal direction of the main surface by laser-trimming to be described later, a colored layer-attached glass substrate having more excellent visibility when used in a display device can be produced, and the laser-trimming property is excellent.

Among them, an acrylic resin is preferred since the adhesion between the glass substrate and the colored layer is more excellent.

The weight average molecular weight (Mw) of the tackifier is, for example, less than 20,000, preferably 400 to 15,000, and more preferably 500 to 10,000.

The glass transition point (Tg) of the tackifier is preferably 30°C to 200°C, more preferably 50°C to 150°C, and still more preferably 60°C to 130°C form the viewpoint of sufficient leveling at the interface with the glass substrate and excellent adhesion to the glass substrate.

The non-curable resins may be used alone or in combination of two or more different types thereof.

The content of the non-curable resin (more preferably, the tackifier) is preferably more than 0 mass% and 150 mass% or less, more preferably 5 mass% to 130 mass%, still more preferably 10 mass% to 100 mass%, and even more preferably 10 mass% to 60 mass% with respect to the curable resin.

In the case where the content of the tackifier is the above-described lower limit value or more, flexibility can be imparted to the colored layer, and sufficient leveling can be performed at the glass interface at the time of transfer, and thus the adhesion is more excellent. In addition, in the case where the content of the tackifier with respect to the content of the cured resin is 150 mass% or less, the durability of the colored layer is excellent; in the case where the content is 130 mass% or less, the durability is further easily improved; in the case where the content is 100 mass% or less, the density of the colorant in the colored layer is increased, a heat generation point is easily increased, and thus the laser-trimming property is improved; and in the case where the content is 60 mass% or less, the laser-trimming property is further improved.

In addition, the content of the non-curable resin (more preferably, the tackifier) is preferably 1 mass% to 50 mass% and more preferably 5 mass% to 30 mass% with respect to the colored layer.

The colored layer may contain components other than the above components as long as the effects of the present invention are not impaired. Examples of the other components include additives such as the component B to be described later, a plasticizer, a non-volatile component, a release agent, an adhesion aid, an antioxidant, and a dispersant.

The colored layer may contain at least one component B selected from the group consisting of methyl ethyl ketoxime, diethyl malonate, epsilon-caprolactam, 3,5-dimethylpyrazole, and acetoxime, and preferably contains the component B.

The content of the component B is preferably 0.5 mass% to 30 mass% and more preferably 2 mass% to 25 mass% with respect to the colored layer.

### (Thickness of Colored Layer)

The thickness of the colored layer is preferably 5 µm to 20 µm, more preferably 5 µm to 15 µm, still more preferably 5 µm to 13 µm, and even more preferably 8 µm to 10 µm. In the case where the thickness of the colored layer is within the above range, a light-shielding property and the visibility can be improved in a well-balanced manner, contact defects of various members can be more suitably prevented, and the adhesion can be improved.

The thickness of the colored layer and a cross-sectional profile along the normal direction of the colored layer to be described later can be measured by using a non-contact-measuring device (for example, "NH-3MAs" manufactured by MITAKA KOHKI Co., Ltd.) using a stage-scanning laser probe method. A more detailed measurement method is to be described later in Examples.

### (Cross-sectional Shape of End Portion)

The structure of the end portion of the colored layer adjacent to an opening (hereinafter, simply referred to as an "end portion") in the case where the colored layer-attached glass substrate has the opening which is a region where the colored layer is not disposed on the main surface of the glass substrate (see FIG. 3) is described.

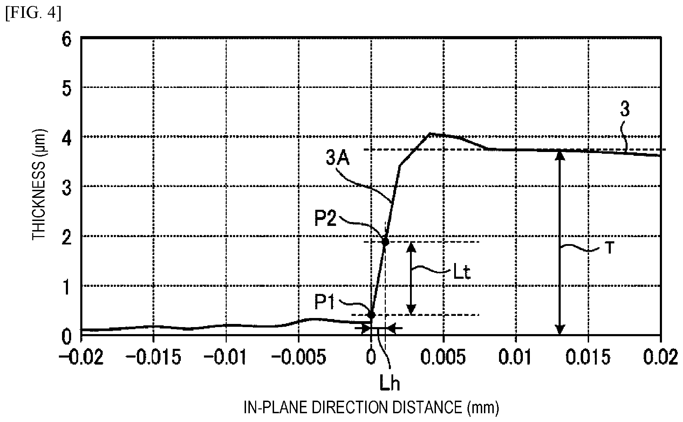

FIG. 4 is a graph showing an example of a structure in the vicinity of the end portion of the colored layer. FIG. 4 shows a shape of the main surface of the glass substrate and a surface of the colored layer (hereinafter, also referred to as a "cross-sectional profile") in a cross section of the colored layer-attached glass substrate, the cross section including the normal direction to the main surface of the glass substrate and perpendicular to a direction in which the boundary line between the opening and the colored layer extends (a direction in which the tangent line extends in the case where the boundary line is a curved line). From this cross-sectional profile, a relationship between a distance in the in-plane direction of the main surface and the thickness of the colored layer can be understood for the colored layer including the end portion near the boundary line. As shown in FIG. 4, the end portion 3A of the colored layer 3 is a region from a position corresponding to the boundary line 8 (see FIG. 3) to a position where the thickness of the colored layer 3 reaches 95% of the average thickness T of the colored layer 3.

In the case where the colored layer-attached glass substrate has an opening, the slope of the end portion of the colored layer is preferably 0.1 or more, more preferably 0.5 or more, and still more preferably 1.0 or more.

That is, the colored layer-attached glass substrate preferably has an opening in which the colored layer is not disposed on the main surface of the glass substrate, and the slope of the end portion of the colored layer adjacent to the opening is preferably 0.1 or more.

In the case where the slope of the end portion is within the above range, a region in the colored layer where the thickness is small and the light shielding property is low is narrower, light leakage at the end portion is further prevented, and the boundary is clearer. Therefore, the visibility when the colored layer-attached glass substrate is used in a display device is more excellent.

As shown in FIG. 4, the slope of the end portion of the colored layer can be determined by setting two points P1 and P2 having different thicknesses on the surface of the end portion 3A and calculating a ratio (Lt/Lh) of a distance Lt in the thickness direction to a distance Lh in the in-plane direction between the two points P1 and P2. Here, the point P1 is a point where the thickness of the colored layer 3 (the distance from the main surface of the glass substrate 2 to the surface of the colored layer 3 on the side opposite to the glass substrate 2) reaches 10% of the average thickness T of the colored layer 3, and the point P2 is a point where the thickness of the colored layer 3 reaches 50% of the average thickness T of the colored layer 3.

The colored layer in which the slope of the end portion is within the above range can be formed by, for example, performing laser-trimming, which is to be described later, in producing the colored layer-attached glass substrate and adjusting laser-trimming conditions.

The colored layer-attached glass substrate according to the present embodiment may be provided with at least one layer selected from the group consisting of an AG layer, an AR layer, and an AFP layer.

The AG layer 4, the AR layer 5, and the AFP layer 6 are described with reference to FIG. 1 again.

### <AG Layer>

The AG (anti-glare) layer 4 is an anti-glare layer that provides anti-glare properties to the laminate 10.

The AG layer 4 is a layer having an uneven shape formed on the second main surface 22 side of the glass substrate 2. The uneven shape may be directly formed on the second main surface 22 of the glass substrate 2, or may be formed of a layer made of a material different from that of the glass substrate 2. The surface roughness (root mean square roughness, RMS) of the uneven shape is preferably 15 nm to 1,000 nm, and more preferably 10 nm to 500 nm.

The AG layer may be a layer formed by an uneven shape imparted by subjecting the second main surface of the glass substrate to an anti-glare treatment and an etching treatment. In addition, the AG layer may be formed by forming a coating film in which particles having an arbitrary refractive index are dispersed, on the second main surface of the glass substrate, or bonding a transparent resin film having an uneven shape.

### <AR Layer>

The AR (anti-reflection) layer 5 is an anti-reflection layer and is provided on the second main surface 22 side of the glass substrate 2. The AR layer 5 brings about an effect of reducing a reflectance of the laminate 10, reduces glare caused by reflection of light, and improves the visibility of a display device using the laminate 10 including the AR layer 5.

Although the configuration of the AR layer is not particularly limited as long as reflection of light can be prevented, for example, a high refractive index layer having a refractive index of 1.9 or more at a wavelength of 550 nm and a low refractive index layer having a refractive index of 1.6 or less at a wavelength of 550 nm may be alternately laminated.

In the example illustrated in FIG. 1, the AR layer 5 is disposed in contact with the AG layer 4, but the AR layer may be disposed directly on the second main surface 22 of the glass substrate 2.

### <AFP Layer>

The AFP (anti-finger-print) layer 6 is an antifouling layer having a function of preventing the adhesion of various stains such as fingerprint traces, sweat, and dust and making stains less noticeable.

The AFP layer 6 is provided on the second main surface 22 side of the glass substrate 2. The AFP layer 6 illustrated in FIG. 1 is disposed on the outermost surface of the laminate 10. Accordingly, the properties of the antifouling layer that keeps a display surface clean are sufficiently exhibited.

The AFP layer is made of, for example, a fluorine-containing compound capable of imparting antifouling properties, water repellency, and oil repellency. As the fluorine-containing compound, a fluorine-containing organic compound (a compound having a fluorine-containing organic group) is preferred. Examples of the fluorine-containing organic compound include a fluorine-containing organosilicon compound.

Each of the AG layer, the AR layer, and the AFP layer described above is an example, and the configuration of each layer may be appropriately changed within a range including the function of the respective layer. In the laminate, the AG layer, the AR layer, and the AFP layer are not essential components, and a part of the AG layer, the AR layer, and the AFP layer may not be provided depending on the configuration of the laminate.

### <Properties of Colored Layer-attached Glass Substrate>

### (Non-cured Component in Colored Layer)

In the colored layer, the amount of the non-cured component extracted from the colored layer is preferably 5 mass% or more and 40 mass% or less, more preferably 5 mass% or more and 30 mass% or less, and still more preferably 10 mass% to 25 mass%, as measured by using the following extraction test. In the case where the amount of the non-cured component extracted from the colored layer is within the above range, the adhesion between the glass substrate and the colored layer and the durability (hot water resistance) are more excellent.

An extraction test method for measuring the amount of the non-cured component extracted is to be described in detail in a second embodiment to be described later.

### (Hot-Water Resistance)

The colored layer-attached glass substrate preferably satisfies the following requirement 1.

Requirement 1: the colored layer-attached glass substrate is immersed in boiling water under an atmospheric pressure, and when the colored layer-attached glass substrate is taken out after one hour of immersion, no peeling-off of the colored layer from the glass substrate is observed.

A detailed method of a hot-water durability test for checking whether the requirement 1 is satisfied is to be described later in Examples.

### (Cross Cut Test)

The colored layer-attached glass substrate preferably satisfies the following requirement 2, and more preferably satisfies the following requirement 3.

Requirement 2: when the colored layer-attached glass substrate is immersed in boiling water under an atmospheric pressure, and after one hour of immersion, a cross cut test in accordance with JIS K5600-5-6 is performed, no peeling-off of the colored layer from the glass substrate is observed, or a ratio of an area of a region peeled off from the glass substrate to a total area of the colored layer is 15% or less.

That is, when the cross cut test in accordance with JIS K5600-5-6 is performed on the colored layer-attached glass substrate that has been subjected to the above hot-water durability test, no peeling-off of the colored layer from the glass substrate is observed, or the ratio of the area of the region peeled off from the glass substrate to the total area of the colored layer is 15% or less.

Requirement 3: in the colored layer-attached glass substrate that has been subjected to the cross cut test, no peeling-off of the colored layer from the glass substrate is observed, or the ratio of the area of the region peeled off from the glass substrate to the total area of the colored layer is more preferably 5% or less.

The colored layer-attached glass substrate preferably satisfies both the requirement 1 and the requirement 2, and particularly preferably satisfies both the requirement 1 and the requirement 3.

It is preferred that no air bubbles are observed between the glass substrate and the colored layer when the colored layer-attached glass substrate is visually observed from the side of the glass substrate opposite to the side where the colored layer is disposed, since the colored layer-attached glass substrate has a more excellent appearance and designability.

That is, it is preferred that no air bubbles are observed between the glass substrate and the colored layer when the colored layer-attached glass substrate is observed from the glass substrate side.

Examples of the method of reducing the amount of the air bubbles between the glass substrate and the colored layer include a method of performing an annealing treatment (post heat treatment) after laminating a colored layer on the main surface of the glass substrate.

### [Second Embodiment]

A colored layer-attached glass substrate according to a second embodiment of the present invention is a colored layer-attached glass substrate including: a glass substrate having a main surface; and a colored layer disposed in contact with the main surface of the glass substrate, in which the amount of a non-cured component extracted from the colored layer is 5 mass% or more and 40 mass% or less, as measured by using the following extraction test.

### (Extraction Test)

(i) The initial weight of the colored layer is measured.
(ii) The colored layer is immersed in an ethanol solution having a concentration of 99.5 vol% for 2 weeks. The ethanol solution in which the colored layer is immersed is replaced once a day.
(iii) The solid that is not dissolved in the ethanol solution is dried, then the weight of the dried solid is measured, and the amount of the non-cured component extracted is calculated by using the following equation 1.
Amount [mass%] of non-cured component extracted = (initial weight [g] of colored layer - weight [g] of solid)/initial weight [g] of colored layer × 100

The above extraction test method is described more specifically.

First, the colored layer is collected from the colored layer-attached glass substrate. The collection method is preferably a method capable of preventing chemical modification of the colored layer, such as a method of rubbing the colored layer by using a metal instrument (for example, a thin plate or a spatula).

The weight of the colored layer sample collected from the colored layer-attached glass substrate is measured. Next, the sample is wrapped with a non-woven fabric bag. A sufficient amount of ethanol solution (concentration: 99.5 vol%) with respect to the colored layer sample is charged into a flask with a cooling tube, and the sample wrapped in the bag is immersed in the ethanol solution. The sample is immersed in the ethanol solution for two weeks while being replaced with a fresh ethanol solution once a day (24 hours). After two weeks, the bag is taken out from the flask, the solid remaining in the bag is completely dried after the extraction test, and the weight of the dried solid is measured.

The amount (unit: mass%) of the non-cured component extracted from the colored layer is calculated by substituting the weight of the colored layer sample before immersion in the ethanol solution (the initial weight of the colored layer) and the weight of the solid obtained by drying after immersion in the ethanol solution, which are measured in the above extraction test, into the above equation 1. Note that, the amount of the non-cured component extracted from the colored layer means the ratio of the amount of the non-cured component extracted from the colored layer into the ethanol solution by the extraction test with respect to a total mass of the colored layer before the extraction test.

The amount of the non-cured component extracted from the colored layer, measured by the above extraction test is preferably 5 mass% or more and 30 mass% or less, more preferably 10 mass% to 25 mass%, still more preferably 10 mass% to 23 mass%, even more preferably 10 mass% to 20 mass%, even still more preferably 10 mass% to 19 mass%, and most preferably 10 mass% to 18 mass%, with respect to the entire colored layer. In the case where the amount of the non-cured component extracted is 25 mass% or less, the durability of the colored layer is more excellent; in the case where the amount is 19 mass% or less, the density of the colorant in the colored layer is increased, the heat generation point is easily increased, and thus the laser-trimming property is also improved; and in the case where the amount is 19 mass% or less, the laser-trimming property is further improved.

It is assumed that most of the non-cured component extracted in the above extraction test is made of the non-curable resin, and as a part thereof, an unreacted component of the curable resin and/or the curing agent and a colorant are contained. On the other hand, it is considered that not all of the non-curable resin contained in the resin layer is extracted as the non-cured component, and for example, the non-curable resin incorporated in the network of the cured resin is difficult to be extracted.

Therefore, the amount of the non-cured component extracted is considered to reflect the amount of components that are easily eluted among the non-curable resin, in other words, the amount of components that are easily flowable. It is presumed that in the case where the amount of the non-cured component extracted is within the above range, fluidity during formation of the colored layer is improved, and a colored layer-attached glass substrate having excellent adhesion between the colored layer and the glass substrate can be obtained.

Hereinafter, each member included in the colored layer-attached glass substrate according to the present embodiment is described in detail.

Examples of the colored layer included in the colored layer-attached glass substrate according to the present embodiment include a colored layer containing a colorant and a cured resin. In the present embodiment, the colored layer preferably contains a colorant, a cured resin, and a non-curable resin.

In the present embodiment, components such as a colorant, a cured resin, and a non-curable resin which may be contained in the colored layer, and properties of the colored layer, including preferred embodiments thereof, are as described in the first embodiment.

In addition, regarding the colored layer-attached glass substrate according to the present embodiment, the glass substrate, layers other than the glass substrate and the colored layer, and the properties of the colored layer-attached glass substrate, including preferred embodiments thereof, are as described in the first embodiment.

In the following description, both the first embodiment and the second embodiment are described unless otherwise specified.

### [Method for Producing Colored Layer-attached Glass Substrate]

The colored layer-attached glass substrate may be produced by using any method as long as the colored layer can be directly formed on the main surface of the glass substrate, and examples thereof include a method of forming a colored layer on the main surface of the glass substrate by using a transfer decoration method.

Examples of the method for producing a colored layer-attached glass substrate by using the transfer decoration method include a method for producing a colored layer-attached glass substrate in which a glass substrate having a main surface is prepared, a transfer member including a transfer substrate and a colored layer precursor film is prepared, the transfer member is laminated on the glass substrate such that the main surface of the glass substrate is in contact with the colored layer precursor film, and the colored layer precursor film disposed in contact with the main surface of the glass substrate is cured to form a colored layer.

The colored layer precursor film contains, for example, a colorant, a curable resin, and a non-curable resin. The colored layer precursor film may further contain a curing agent.

Hereinafter, the method for producing a colored layer-attached glass substrate by using a transfer decoration method is described in detail.

The glass substrate is produced, for example, by steps of cutting, grinding, and polishing a large-sized plate glass.

Examples of the method of cutting the plate glass include cutting with a diamond blade, a scribing cleavage method, a laser-cutting method, and chemical cutting by etching. For the grinding or polishing, a grindstone may be used, and a buff or brush made of cloth, leather, rubber, or the like other than a grindstone may be used. At this time, an abrasive such as cerium oxide, alumina, carborundum, and colloidal silica may be used. Among them, a grindstone is preferred as the polishing tool from the viewpoint of dimensional stability.

From the viewpoint that the strength of the glass substrate is more excellent, the glass member obtained by the above step is preferably subjected to a chemical strengthening treatment. The method of the chemical strengthening treatment is as described above.

Separately from the preparation of the glass substrate, a transfer member including a transfer substrate and a colored layer precursor film is prepared.

Examples of the method of preparing the transfer member include a method of producing a transfer member including a transfer substrate and a colored layer precursor film disposed on a surface of the transfer substrate by forming a coating film on the surface of the transfer substrate by using a composition containing a component constituting the colored layer (hereinafter, also referred to as a "composition A") and drying the coating film if necessary.

The transfer substrate is appropriately selected according to the method for forming the colored layer precursor film and the method for transferring the colored layer precursor film to the glass substrate. The transfer substrate is preferably a resin substrate from the viewpoint of flexibility, heat resistance, surface cleanliness, and smoothness.

Examples of the resin constituting the transfer substrate include thermoplastic resins such as a polyethylene terephthalate resin, a polyethylene resin, and a polypropylene resin. Depending on the purpose of facilitating separation after transfer or the like, a functional layer may be provided on the surface of the transfer substrate, and a surface treatment such as an easy adhesion treatment and a corona treatment may be performed on the surface of the transfer substrate.

The thickness of the transfer substrate is, for example, 10 µm to 300 µm, preferably 20 µm to 250 µm, and more preferably 40 µm to 200 µm.

In the case where the transfer substrate is softened when the transfer member is laminated on the glass substrate to be described later, the glass transition point (Tg) of the resin constituting the transfer substrate is preferably 70°C to 180°C, and more preferably 100°C to 150°C.

The composition A is a composition containing components constituting the colored layer, and is used for forming the colored layer precursor film and the colored layer. That is, the colored layer is a layer formed by using the composition A containing a colorant, a curable resin, and a non-cured component.

Examples of the composition A include a composition containing a colorant, a curable resin, a non-curable resin, and a solvent. The composition A may contain a curing agent and preferably contains a curing agent.

The colorant, the curable resin, the curing agent, and the non-curable resin contained in the composition A, including preferred embodiments thereof, are as described above as components constituting the colored layer of the colored layer-attached glass substrate according to the first embodiment.

Note that, regarding the colorant, the curable resin, the curing agent, and the non-curable resin, a preferred range of the content in the colored layer or in the colored layer precursor film is directly applicable as a preferred range of the content with respect to a total content of a solid content in the composition A.

The solvent contained in the composition A is appropriately selected depending on the components other than the solvent and the type of the transfer substrate, and examples thereof include an alcohol-based solvent, an ester-based solvent, a ketone-based solvent, an aromatic hydrocarbon-based solvent, and an aliphatic hydrocarbon-based solvent.

Examples of the alcohol-based solvent include isopropyl alcohol, methanol, and ethanol. Examples of the ester-based solvent include ethyl acetate. Examples of the ketone-based solvent include methyl ethyl ketone. Examples of the aromatic hydrocarbon-based solvent include toluene and xylene. Examples of the aliphatic hydrocarbon-based solvent include hexane.

The content of the solvent in the composition A is preferably 20 mass% to 80 mass%, and more preferably 30 mass% to 60 mass% with respect to the total mass of the composition A.

That is, the total content of components other than the solvent in the composition A (hereinafter, also referred to as a "solid content concentration") is preferably 20 mass% to 80 mass%, and more preferably 40 mass% to 70 mass% with respect to the total mass of the composition A.

The composition A can be prepared by using a known method. The components to be contained in the composition A may be mixed, or two or more of the components may be mixed to prepare a preliminary composition, and then the preliminary composition may be mixed with the other components or another preliminary composition to prepare the composition A.

As a method of forming the coating film of the composition A on the surface of the transfer substrate by using the composition A, a known coating film-forming method can be applied. Examples thereof include screen-printing, inkjet-printing, offset-printing, flexographic-printing, stencil-printing, gravure-printing, roller-printing, curtain flow, die-coating, gravure-coating, microgravure-coating, reverse-coating, roll-coating, flow-coating, and spray-coating.

In the case where the composition A contains a solvent, the coating film is preferably dried to evaporate the solvent. The coating film may be dried by using a known method such as heating of the coating film.

In the case where the composition A contains a thermal curing agent, a heating temperature for drying the coating film of the composition A is preferably lower than the curing temperature of the thermal curing agent.

The coating film of the composition A may be used as the colored layer precursor film without drying.

The colored layer precursor film formed on the transfer substrate may have a pattern corresponding to the target colored layer, and the patterned colored layer precursor film can be formed by using the above coating film-forming method.

The thickness of the colored layer precursor film in the transfer member is preferably 5 µm to 20 µm, more preferably 5 µm to 15 µm, and still more preferably 8 µm to 15 µm.

Then, the transfer member is laminated on the glass substrate such that the main surface of the glass substrate is in contact with the colored layer precursor film of the transfer member.

When laminating the transfer member on the glass substrate, the transfer member before lamination may be heated, and the transfer member including the softened transfer substrate and the colored layer precursor film may be laminated on the glass substrate. By laminating the softened transfer substrate, it is easier to form a colored layer having a desired pattern shape. In particular, in the case where the main surface of the glass substrate on which the colored layer is disposed has a curved surface, it is preferred to soften the transfer substrate by heating when laminating the transfer member on the glass substrate since the adhesion between the glass substrate and the colored layer is more excellent.

When laminating the transfer member on the glass substrate, the glass substrate before lamination may be heated.

The heating temperature for the transfer member before lamination is, for example, 80°C to 180°C, and preferably 100°C to 160°C.

In addition, in the case where the colored layer precursor film contains a thermal curing agent, the heating temperature for the transfer member before lamination is preferably lower than the curing temperature of the thermal curing agent, and more preferably 10°C or more lower than the curing temperature of the thermal curing agent. By setting the heating temperature within these ranges, the colored layer precursor film can be brought into close contact with the main surface of the glass substrate without being cured.

Examples of the method of heating the transfer member include irradiation with infrared rays, superheated vapor, and contact with a hot plate. The glass substrate can also be heated by using the same method.

The lamination of the glass substrate and the transfer member is preferably performed by using a vacuum pressure-molding method.

More specifically, it is a method in which the prepared glass substrate and transfer member are installed in a chamber such that the main surface of the glass substrate faces the colored layer precursor film, the chamber is divided by the transfer member into a first space including the glass substrate and a second space not including the glass substrate, the transfer substrate is heated and softened, and the air pressure in the first space is set lower than the air pressure in the second space to bring the colored layer precursor film into contact with the main surface of the glass substrate.

When the glass substrate and the transfer member are laminated by using the above method, the softened transfer member deforms along the main surface of the glass substrate, and thus the adhesion between the colored layer precursor film (and the colored layer) bonded to the main surface of the glass substrate and the main surface is more excellent. In particular, even in the case where at least a part of the main surface of the glass substrate is a curved surface, the above-described adhesion can be obtained, which is preferred.

The heating temperature and the heating method for the transfer substrate in the vacuum pressure-molding method are as described above. The heating method for the transfer substrate is preferably a method of bringing a hot plate disposed to face the transfer substrate in the second space of the vacuum pressure-molding machine into contact with the transfer substrate.

In addition, when the glass substrate and the transfer member are laminated by using the vacuum pressure-molding method, the glass substrate may be heated.

The method of setting the air pressure in the first space (glass substrate side) to be lower than the air pressure in the second space is preferably a method of depressurizing the first space, and more preferably a method of depressurizing the first space and pressurizing the second space.

The air pressure in the first space when the colored layer precursor film is brought into contact with the main surface of the glass substrate is, for example, 1 MPa or less, preferably 0.2 MPa or less, more preferably 0.1 MPa or less, and still more preferably 0.05 MPa or less. The air pressure in the first space is preferably 10 Pa or more.

In the case of pressurizing the second space, the air pressure in the second space is, for example, 0.01 MPa or more, preferably 0.05 MPa or more, more preferably more than 0.1 MPa, and still more preferably more than 0.2 MPa. The air pressure in the second space is preferably less than 1 MPa.

For details of the method of laminating the glass substrate and the transfer member by using the vacuum pressure-molding method, a known method can be referred to.

Next, the colored layer precursor film disposed in contact with the main surface of the glass substrate is cured to produce a colored layer-attached glass substrate.

A curing treatment is appropriately selected depending on the components constituting the colored layer precursor film.

In the case where the colored layer precursor film contains a thermal curing agent, the colored layer precursor film is cured by heating the laminated colored layer precursor film to a temperature equal to or higher than the curing temperature of the thermal curing agent. The heating temperature at this time is preferably 10°C or more higher than the curing temperature of the thermal curing agent. The heating temperature is preferably 200°C or lower.

In the case where the colored layer precursor film contains a photocuring agent, the colored layer precursor film is cured by irradiating the colored layer precursor film with light having a predetermined wavelength. As a method of curing the colored layer precursor film by light irradiation, the wavelength, the irradiation amount, the irradiation time, and the like of the irradiation light are appropriately selected according to the type of the photocuring agent, the composition of the colored layer precursor film, and the like. Examples thereof include a method of irradiation with ultraviolet rays of about 0.3 mW/cm² to 30 mW/cm² for about 1 minute to 30 minutes.

When producing the colored layer-attached glass substrate by using the above transfer decoration method, the transfer substrate may be used as a protective member without being peeled off, but is usually peeled off.

The transfer substrate may be peeled off before the colored layer precursor film is cured, or the transfer substrate may be peeled off from the colored layer-attached glass substrate after the colored layer precursor film is cured. It is preferred to peel off the transfer substrate after the colored layer precursor film is cured since the adhesion between the colored layer and the main surface of the glass substrate is more excellent.

In the case of performing the lamination of the glass substrate and the transfer member by using the vacuum pressure-molding method, the curing of the colored layer precursor film and the peeling-off of the transfer substrate from the colored layer-attached glass substrate may be performed by using a device that performs vacuum pressure-molding.

### <Laser-Trimming>

In the production of the colored layer-attached glass substrate, a treatment of irradiating a part of the colored layer disposed on the main surface of the glass substrate with laser light to remove the colored layer irradiated with the laser light (hereinafter, also referred to as "laser-trimming") may be performed after the colored layer is formed.

In particular, when producing the colored layer-attached glass substrate having an opening, it is preferred to perform the above laser-trimming to remove an excess portion of the colored layer and form an end portion of the colored layer adjacent to the opening. This is because an opening having a desired shape can be easily formed at an accurate position, the slope of the end portion of the colored layer is closer to a normal line of the main surface, the boundary between the opening and the colored layer is clearer, and the visibility when the colored layer-attached glass is used in a display device is more excellent.

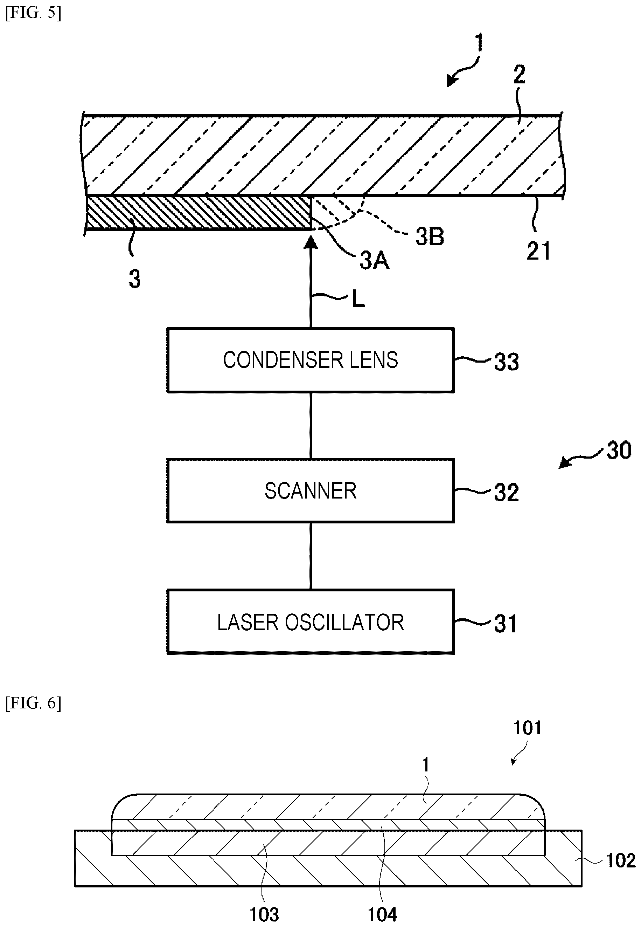

FIG. 5 is a schematic diagram illustrating an example of a configuration of a laser irradiation device that irradiates a part of the colored layer with laser light.

A laser irradiation device 30 illustrated in FIG. 5 performs ablation processing on the colored layer 3 by irradiation of laser light L having absorbency on the colored layer 3. The laser irradiation device 30 includes a laser oscillator 31, a scanner 32, and a condenser lens 33. The laser oscillator 31 oscillates the laser light L having a wavelength absorbable by the colored layer 3 at a predetermined irradiation timing based on a control signal from a control device (not illustrated). The condenser lens 33 condenses the laser light L oscillated from the laser oscillator 31 and guides the laser light L to the colored layer 3. The scanner 32 is disposed between the laser oscillator 31 and the condenser lens 33, and directs the optical axis of the laser light L oscillated from the laser oscillator 31 toward the condenser lens 33. The scanner 32 includes a mirror (not illustrated), and by rotating the mirror around an axis, the colored layer 3 is scanned with the laser light L deflected by the mirror. Accordingly, as illustrated in FIG. 5, an excess portion 3B of the colored layer 3 irradiated with the laser light L is removed, and the end portion 3A is formed.

Note that, the laser irradiation device and the treatment method of the laser-trimming is not limited to the configuration illustrated in FIG. 5. For example, in FIG. 5, the colored layer 3 is irradiated with the laser light L from a first main surface 21 side where the colored layer 3 is disposed. Alternatively, the laser irradiation device may be disposed on a second main surface side of the glass substrate and the colored layer may be irradiated with the laser light transmitted through the glass substrate.

The laser-trimming conditions are set as follows.

The wavelength of the laser light L is appropriately selected depending on the absorption wavelength of the colorant contained in the colored layer, and is preferably 300 nm to 1,100 nm, and more preferably 500 nm to 1,100 nm.

The irradiation interval of the laser light L is preferably less than 100 µm, and more preferably less than 70 µm. The scanning speed is preferably 1,000 mm/s to 8,000 mm/s, and more preferably 1,000 mm/s to 4,000 mm/s. The irradiation interval is an interval of the laser light L intermittently radiated to the colored layer when the colored layer is scanned, and is calculated by dividing the scanning speed by an irradiation frequency of the laser light L.

After the colored layer-attached glass substrate is produced by the above-described method, a step of forming at least one selected from the group consisting of the AG layer, the AR layer, and the AFP layer on the main surface (second main surface) of the glass substrate opposite to the main surface where the colored layer is directly disposed may be performed.

The methods for producing the AG layer, the AR layer, and the AFP layer are appropriately selected from known methods.

### [Application]

### <Cover Glass>

The colored layer-attached glass substrate according to the present invention can be used, for example, as a cover glass for a display. The colored layer-attached glass substrate can be used alone as a cover glass for a display, and at least one functional layer selected from the group consisting of an AG layer, an AR layer, and an AFP layer is preferably laminated on the second main surface opposite to the first main surface where the colored layer of the glass substrate is disposed. In addition, in the case of being used as a cover glass for a display, the colored layer-attached glass substrate preferably has an opening.

The cover glass for a display including the colored layer-attached glass substrate can protect an object while ensuring the visibility of a display image of the display.

### <Display Device>

One embodiment of a display device according to the present invention is a display device including a cover glass including a colored layer-attached glass substrate and a display, in which a main surface of the cover glass on a colored layer side faces the display.

As an example of the above display device including the cover glass for a display, an in-vehicle display device to be mounted and used in a vehicle is described with reference to FIG. 6.

An in-vehicle display device 101 illustrated in FIG. 6 includes the colored layer-attached glass substrate 1, a housing 102, a display 103, and an adhesive layer 104.

The in-vehicle display device 101 is, for example, a car navigation device, a meter panel, or a rear seat entertainment (RSE) device for an occupant in a rear seat to view a video or the like.

The in-vehicle display device 101 includes the housing 102 that houses each unit. The display 103 is disposed inside the housing 102. Examples of the display 103 include a liquid crystal panel, an organic EL (electroluminescence) panel, and an electronic ink type panel. The display 103 may include a touch panel or the like.

The display 103 displays, for example, a car navigation screen, various meters such as a speed meter, and an image of a start button, and the like.

In the in-vehicle display device 101, the colored layer-attached glass substrate 1 is bonded to the display 103 via the adhesive layer 104. Accordingly, the colored layer-attached glass substrate 1 functions as a cover glass of the display 103.

Examples of the adhesive layer 104 include a layer made of a transparent resin obtained by curing a liquid curable resin composition. The adhesive layer 104 may be an OCA (optical clear adhesive) film or tape. The thickness of the adhesive layer 104 is preferably 5 µm or more, and more preferably 50 µm or more. On the other hand, the thickness of the adhesive layer 104 is preferably 400 µm or less, and more preferably 200 µm or less.

An embodiment of the display device including the colored layer-attached glass substrate according to the present invention as a cover glass is not limited to the embodiment illustrated in FIG. 6. For example, at least a part of the colored layer-attached glass substrate may have a curved surface.

In addition to the in-vehicle display device, the colored layer-attached glass substrate according to the present invention can be used as a cover glass for a display in a display device such as a panel display (a liquid crystal display and an organic EL display) and a portable device.

### [Examples]

Hereinafter, the present invention is specifically described with reference to Examples. However, the present invention is not limited to the following Examples. Examples 1 to 7, and 11 are Inventive Examples, and Examples 8 to 10 are Comparative Examples.

### [Example 1]

A colored layer-attached glass substrate in Example 1 was prepared as follows.

As a glass substrate, a rectangular aluminosilicate glass ("Dragontrail (registered trademark)" manufactured by AGC Inc.) having a thickness of 1.3 mm, a length of 100 mm, and a width of 200 mm was prepared.

### (Preparation of Composition A)

A composition A1 was prepared by using the following ink agent, curing agent, non-curable resin, and solvent as raw materials.
· Ink agent I-1: "INQ-HF 979 Black" manufactured by Teikoku Printing Inks Mfg. Co., Ltd.
· Curing agent: blocked isocyanate compound containing methyl ethyl ketoxime (MEKO) as a blocking agent ("BK1175" manufactured by SAPICI, curing temperature T1: about 150°C)
· Non-curable resin: acrylic tackifier ("UH-2170" manufactured by TOAGOSEI CO., LTD., weight average molecular weight (Mw): 14,000)
· Solvent: methyl ethyl ketone (MEK)

First, the above non-curable resin was dissolved in the above solvent to prepare a premix b1. In addition, the above ink agent and the above curing agent were mixed to prepare a composition a1. The composition a1 and the premix b1 were blended at a ratio at which composition a1: premix b1 was 50:7 in terms of mass ratio, and the blended materials were mixed and stirred by using a rotating and revolving stirrer to prepare a composition A1 as a colored layer-forming composition.

### (Preparation of Transfer Member)

As a transfer substrate, a resin substrate made of an olefin resin and having a thickness of 0.1 mm, a length of 300 mm, and a width of 210 mm ("DECOFIT (registered trademark) Q01CK" manufactured by TORAY INDUSTRIES, INC., glass transition point Tg: about 70°C) was prepared.

The prepared composition A1 was printed on the surface of the above resin substrate by using a screen-printing method. The formed coating film was dried at 70°C for 30 minutes to prepare a transfer member including a resin substrate and a colored layer precursor film formed on the surface of the resin substrate. The formed colored layer precursor film had a thickness of 0.01 mm, and had a rectangular shape having a length of 250 mm and a width of 200 mm in a plan view.

### (Production of Colored Layer-attached Glass Substrate)

The glass substrate was placed on an installation table provided in a chamber of a vacuum pressure-molding machine. The prepared transfer member was placed above the glass substrate such that the colored layer precursor film faced the glass substrate. The transfer substrate of the transfer member was heated to 100°C by using a preheating plate, and then the installation table was moved upward to bring the heated transfer member into contact with the glass substrate. Next, in the first space and the second space in the chamber divided by the transfer member, the air pressure in the first space including the glass substrate was reduced to about 400 Pa. At this time, the air pressure in the second space was an atmospheric pressure.

The air pressure in the first space was returned to an atmospheric pressure, then the resin substrate was peeled off from the colored layer precursor film, and the laminate of the glass substrate and the colored layer precursor film was heated at 160°C for 30 minutes. Accordingly, the colored layer precursor film was cured to form a colored layer, thereby producing a colored layer-attached glass substrate including a colored layer disposed in contact with the main surface of the glass substrate.

### (Laser-Trimming)

The laser-trimming, including irradiating the colored layer of the produced colored layer-attached glass substrate with laser light via the glass substrate and removing the colored layer irradiated with the laser light, was performed by using the method described above.

The laser-trimming was performed by using a laser irradiation device (manufactured by KEYENCE CORPORATION) under conditions of a laser light wavelength of 1,064 nm and a laser light irradiation interval of about 100 µm.

With the laser-trimming, a part of the colored layer was removed to form a rectangular opening having a length of 10 mm and a width of 10 mm.

### [Examples 2 to 11]

In Examples 2 to 7 and 11, according to the method for preparing the composition A described in Example 1, compositions a2 to a7, a composition a11, premixes b2 to b7, and a premix b11 were prepared by changing the types and use amounts of the ink agent, the curing agent, the non-curable resin, and the solvent to have the compositions shown in Table 1 to be described later, and each of the prepared compositions and each of the premixes was blended instead of the composition a1 and the premix b1 to prepare compositions A2 to A7 and A11 shown in Table 1 to be described later. The compositions a2 to a7, the composition a11, the premixes b2 to b7, and the premix b11 were blended at a blending ratio shown in Table 1 to be described later.

In Examples 8 to 10, according to the method for preparing the composition a1 described in Example 1, compositions a8 to a10 were prepared by changing the types and use amounts of the ink agent and the curing agent to have the compositions shown in Table 1 to be described later, and the prepared compositions a8 to a10 were directly used as colored layer-forming compositions A8 to A10.

Hereinafter, the ink agent, the curing agent, the non-curable resin, and the solvent used in the preparation of each composition are described.

### -Ink Agent-

· Ink agent I-2: "HF GV3 RX01 710 Black" manufactured by Seiko advance Ltd.
· Ink agent I-3: "1300HK" manufactured by Seiko Advance Ltd.
Note that, the ink agents I-1, I-2, and I-3 each contained carbon black (CB) as a colorant and a curable resin shown in Table 1 to be described later.

### -Curing Agent-

· Isocyanate compound ("106 curing agent" manufactured by Teikoku Printing Inks Mfg. Co., Ltd.)

### -Non-curable Resin-

· Acrylic tackifier ("UC-3000" manufactured by TOAGOSEI CO., LTD., weight average molecular weight (Mw): 10,000)
· Styrene acrylic tackifier ("UC-3080" manufactured by TOAGOSEI CO., LTD., weight average molecular weight (Mw): 14,000)
· Terpene phenol-based tackifier ("YS POLYSTAR G-125" manufactured by YASUHARA CHEMICAL CO., LTD., weight average molecular weight (Mw): 600)

### -Solvent-

· Butyl acetate

Colored layer-attached glass substrates were each produced according to the method for preparing a transfer member and the method for producing a colored layer-attached glass substrate in Example 1, except that the prepared compositions A2 to A11 were used and the transfer substrate was heated at the temperature shown in Table 1 to be described later before the transfer member was brought into contact with the glass substrate.

In Examples 1 to 7, 9, and 11, the entire surface of the formed colored layer adhered to the main surface of the glass substrate. On the other hand, in the step of peeling off the resin substrate after the transfer member was brought into contact with the glass substrate, in Example 8, the entire formed colored layer precursor film was peeled off from the glass substrate, and in Example 10, about 20 area% or more of the total area of the formed colored layer precursor film was peeled off from the glass substrate.

The laser-trimming was performed on the colored layers included in the colored layer-attached glass substrates produced in Examples 1 to 7, 9, and 11 in the same manner as in Example 1.

### [Measurement]

The following measurements were performed on the colored layers included in the colored layer-attached glass substrates in Examples 1 to 7, 9, and 11. The measurement results are shown in the following Table 1.

The thickness of the colored layer was measured in a non-contact manner using a stage-scanning laser probe-measuring device ("NH-3MAs" manufactured by MITAKA KOHKI Co., Ltd.). Specifically, five positions were randomly selected in the region other than the end portion of the colored layer, and the thickness of the colored layer with reference to the first main surface of the glass substrate (the distance from the first main surface of the glass substrate to the surface of the colored layer in the normal direction of the first main surface) was measured. An arithmetic mean value of the obtained measured values was calculated to obtain the average thickness (unit: µm) of the colored layer.

A cross-sectional profile (see FIG. 4) of the end portion of the colored layer adjacent to the opening was acquired, by using the above measuring device, in the cross section of colored layer-attached glass substrate, the cross section including the normal direction to the main surface of the glass substrate and perpendicular to a direction in which the boundary line between the opening and the colored layer extended.

In the obtained cross-sectional profile of the end portion of the colored layer, the ratio (Lt/Lh) of the distance Lt in the thickness direction between the point P1, where the thickness reached 10% of the average thickness of the colored layer, and the point P2, where the thickness reached 50% of the average thickness of the colored layer, to the distance Lh in the in-plane direction between the two points was calculated and used as the slope of the end portion. The slope of the end portion was 0.1 or more in Examples 1 to 3, 5 to 7, and 11.

For the colored layer-attached glass substrate, an OD value (optical density) at a position moved by 20 µm from the boundary line between the opening and the colored layer to the colored layer side in the in-plane direction was measured by using an OD measuring device ("LV-OD" manufactured by Lambda Vision Inc.).

The larger the OD value, the higher the light-shielding property of the colored layer. In the case where the OD value is more than 5, the light shielding property can be evaluated as good.

### <Amount of Non-cured Component Extracted>

The colored layer was scraped off from the colored layer-attached glass substrate by using a metal thin plate, the colored layer sample was collected, and the weight thereof was measured. Next, in the extraction test method described above, the obtained colored layer sample was put into a bag and immersed in an ethanol solution having a concentration of 99.5 vol% for 2 weeks, then the bag was taken out from the ethanol solution, the solid remaining in the bag was completely dried, and the weight of the solid was measured. The amount (unit: mass%) of the non-cured component extracted was calculated, by using the above-described equation 1, based on the obtained initial weight of the colored layer before immersion in the ethanol solution and the measured weight of the solid obtained by immersion in the ethanol solution and drying.

### [Evaluation]

The colored layer-attached glass substrates in Examples 1 to 7, 9, and 11 were evaluated as follows. In Example 10, the following cross cut test was performed on a part of the colored layer remaining on the produced colored layer-attached glass substrate. The evaluation results are shown in the following Table 1.

### <Hot-Water Durability Test>

Water was charged into a beaker and boiled under an atmospheric pressure. The colored layer-attached glass substrate in each Example was immersed in boiling water, and the boiling state of water was maintained for 1 hour. After one hour passed from the start of immersion, the colored layer-attached glass substrate was taken out, the moisture was wiped off, and then the presence or absence of peeling-off of the colored layer from the glass substrate was visually observed. Note that, in this test and the cross cut test to be described later, a colored layer-attached glass substrate without laser-trimming was used.

The hot-water resistance was evaluated according to the following criteria based on the observation results.
A: No peeling-off of the colored layer is observed.
B: Peeling-off of the colored layer is observed.

### <Cross Cut Test>

The colored layer of the colored layer-attached glass substrate that had been subjected to the hot-water durability test was cut in a lattice shape with a width of 1 mm to form 100 squares. A cellophane tape was attached to the region where the squares of the colored layer were formed, and then peeled off.

The squares after peeling off the cellophane tape were observed, and the adhesion was evaluated according to the following criteria based on the obtained observation results.
A: No peeling-off is observed in any square.
B: Small peeling-off is observed at the cut intersection points. The ratio of the area of the peeled-off region to the total area of the colored layer is 5% or less.
C: Peeling-off is observed along the cut intersection points and/or the cut line. The ratio of the area of the peeled-off region to the total area of the colored layer is more than 5% and 15% or less.
D: Peeling-off is observed on a part of or entire of the surface. The ratio of the area of the peeled-off region to the total area of the colored layer is more than 15%.

### <Laser-Trimming Property>

For the colored layer-attached glass substrates produced in Examples 1 to 7 and 11, a transmission haze of the glass substrate in the opening from which the colored layer was removed by laser-trimming was measured by using a haze meter.
A: The transmission haze is 1.0% or less.
B: The transmission haze is more than 1.0% and 5.0% or less.
C: The transmission haze is more than 5.0% and 30.0% or less.
D: The transmission haze is more than 30.0%.

Table 1 shows the composition of the composition used for forming the colored layer, the heating temperature of the transfer substrate, the measurement results of the formed colored layer, and the evaluation results.

In the table, for the "colored layer precursor film", the content of the curing agent with respect to the total mass of the colored layer precursor film is indicated by mass percentage in the "curing agent content [mass%]" column, and the ratio of the content of the non-curable resin with respect to the content of the curable resin contained in the colored layer precursor film is indicated by mass percentage in the "non-curable resin/curable resin ratio [mass%]" column.

### [Table 1]

**Table 1**

| Table 1 | | | | Ex. 1 | Ex. 11 | Ex. 2 | Ex. 3 | Ex. 4 | Ex. 5 |
|---|---|---|---|---|---|---|---|---|---|
| Composition A | Final composition number | | | A1 | A2 | A2 | A3 | A4 | A5 |
| | Composition a | Number | | a1 | a2 | a2 | a3 | a4 | a5 |
| | | Ink agent | Number | I-1 | I-2 | I-2 | I-2 | I-2 | I-3 |
| | | | Curable resin | Poly-ester | Acrylic resin | Acrylic resin | Acrylic resin | Acrylic resin | Epoxy resin |
| | | | Content [mass%] | 96.9% | 96.9% | 96.9% | 96.9% | 96.9% | 100.0% |
| | | Curing agent | Type | BK1175 | BK1175 | BK1175 | BK1175 | BK1175 | - |
| | | | T1 [°C] | 150 | 150 | 150 | 150 | 150 | - |
| | | | Content [mass%] | 3.1% | 3.1% | 3.1% | 3.1% | 3.1% | - |
| | Premix b | Number | | b1 | b2 | b2 | b3 | b4 | b5 |
| | | Non-curable resin | Type | Acrylic tackifier | Acrylic tackifier | Acrylic tackifier | Acrylic tackifier | Acrylic tackifier | Acrylic tackifier |
| | | | Number | UH2170 | UC3000 | UC3000 | UC3000 | UC3000 | UH2170 |
| | | | Tg [°C] | 60 | 65 | 65 | 65 | 65 | 60 |
| | | | Solid content concentration [mass%] | 30.0% | 50.0% | 50.0% | 50.0% | 50.0% | 30.0% |
| | | Solvent | Type | MEK | Butyl acetate | Butyl acetate | Butyl acetate | Butyl acetate | MEK |
| | Blending ratio (a:b) [mass ratio] | | | 50:7 | 50:9 | 50:14 | 50:28 | 50:60 | 50:14 |
| Colored layer precursor film | Curing agent content [mass%] | | | 3.5% | 3.3% | 3.0% | 2.6% | 2.0% | - |
| | Non-curable resin/curable resin ratio [mass%] | | | 9.8% | 13% | 21% | 71% | 153% | 20% |
| Heating temperature [°C] of transfer substrate | | | | 100 | 140 | 140 | 140 | 140 | 100 |
| Colored Layer after transfer | Average thickness [µm] | | | 10 | 10 | 10 | 10 | 10 | 10 |
| | OD value | | | >5 | >5 | >5 | >5 | >5 | > 5 |
| | Amount [mass%] of non-cured component extracted | | | - | 11.3% | 16.7% | 19.5% | 25.3% | - |
| Evaluation item | Production availability | | | A | A | A | A | A | A |
| | Hot-water resistance | | | A | A | A | A | A | A |
| | Cross cut test | | | B | B | B | B | D | B |
| | Laser-trimming property | | | C | A | A | C | D | C |

**Table 1 (Continued)**

| Table 1 | | | | Ex. 6 | Ex. 7 | Ex. 8 | Ex. 9 | Ex. 10 |
|---|---|---|---|---|---|---|---|---|
| Composition A | Final composition number | | | A6 | A7 | A8 | A9 | A10 |
| | Composition a | Number | | a6 | a7 | a8 | a9 | a10 |
| | | Ink agent | Number | I-2 | I-2 | I-1 | I-1 | I-2 |
| | | | Curable resin | Acrylic resin | Acrylic resin | Poly-ester | Poly-ester | Acrylic resin |
| | | | Content [mass%] | 96.9% | 96.9% | 96.9% | 96.9% | 96.9% |
| | | Curing agent | Type | BK1175 | BK1175 | 106 | BK1175 | BK1175 |
| | | | T1 [°C] | 150 | 150 | - | 150 | 150 |
| | | | Content [mass%] | 3.1% | 3.1% | 4.0% | 3.1% | 3.1% |
| | Premix b | Number | | b6 | b7 | No | No | No |
| | | Non-curable resin | Type | Styrene acrylic tackifier | Terpene phenol-based tackifier | - | - | - |
| | | | Number | UC3080 | G-125 | - | - | - |
| | | | Tg [°C] | 133 | 125 | - | - | - |
| | | | Solid content concentration [mass%] | 30.0% | 30.0% | - | - | - |
| | | Solvent | Type | Butyl acetate | Butyl acetate | - | - | - |
| | Blending ratio (a:b) [mass ratio] | | | 50:14 | 50:14 | - | - | - |
| Colored layer precursor film | Curing agent content [mass%] | | | 3.0% | 3.0% | 4.4% | 3.4% | 3.8% |
| | Non-curable resin/curable resin ratio [mass%] | | | 21% | 21% | - | - | - |
| Heating temperature [°C] of transfer substrate | | | | 140 | 140 | 100 | 100 | 100 |
| Colored Layer after transfer | Average thickness [µm] | | | 10 | 10 | 10 | 10 | 10 |
| | OD value | | | >5 | >5 | >5 | > 5 | >5 |
| | Amount [mass%] of non-cured component extracted | | | - | - | - | - | 4.5% |
| Evaluation item | Production availability | | | A | A | B | A | B |
| | Hot-water resistance | | | A | A | - | B | - |
| | Cross cut test | | | C | B | - | D | D |
| | Laser-trimming property | | | B | A | - | - | - |

As shown in the above Table 1, the glass substrates in Examples 1 to 7 and 11, each of which is a colored layer-attached glass substrate including a glass substrate having a main surface and a colored layer disposed in contact with the main surface, in which the colored layer contains a colorant, a cured resin, and a non-curable resin, had excellent hot-water resistance in the colored layer.

In addition, the colored layer-attached glass substrate including a glass substrate having a main surface and a colored layer disposed in contact with the main surface and having the amount of the non-cured component extracted from the colored layer of 5 mass% or more and 40 mass% or less had excellent hot-water resistance in the colored layer.

In contrast, in the colored layer-attached glass substrate in Example 9 in which the colored layer does not contain a non-curable resin, the hot-water resistance was insufficient.

### INDUSTRIAL APPLICABILITY

According to the present invention, it is possible to provide a colored layer-attached glass substrate, a cover glass, and a display device having a colored layer having excellent durability. It is also possible to provide a method for producing a colored layer-attached glass substrate having a colored layer having excellent durability by using a transfer decoration method.

Although the present invention has been described in detail with reference to specific embodiments, it is apparent to those skilled in the art that various changes and modifications can be made without departing from the spirit and scope of the present invention.

The present application is based on a Japanese Patent Application (No. 2022-197301) filed on December 9, 2022, and a Japanese Patent Application (No. 2022-212353) filed on December 28, 2022, and the contents of which are incorporated herein by reference.

### REFERENCE SIGNS LIST

1 colored layer-attached glass substrate
2, 2A, 2B, 2C glass substrate
3 colored Layer
3A end portion
3B excess portion
4 AG layer
5 AR layer
6 AFP layer
7 opening
8 boundary line
10 laminate
21 first main surface
22 second main surface
30 laser irradiation device
31 laser oscillator
32 scanner
33 condenser lens
41, 51, 61 curved portion
42 flat surface portion
52, 62 midpoint
101 in-vehicle display device
102 housing
103 display
104 adhesive layer

## Claims

1. A colored layer-attached glass substrate comprising:
a glass substrate having a main surface; and
a colored layer disposed in contact with the main surface, wherein
the colored layer contains a colorant, a cured resin, and a non-curable resin.

2. The colored layer-attached glass substrate according to claim 1, wherein the cured resin is a cured product of a curable resin and a curing agent.

3. The colored layer-attached glass substrate according to claim 2, wherein the curing agent is a thermal curing agent or a photocuring agent.

4. The colored layer-attached glass substrate according to claim 2, wherein the curing agent is a thermal curing agent.

5. The colored layer-attached glass substrate according to claim 2, wherein the curing agent contains a blocked isocyanate.

6. The colored layer-attached glass substrate according to claim 2, wherein the colored layer further contains at least one selected from the group consisting of methyl ethyl ketoxime, diethyl malonate, epsilon-caprolactam, 3,5-dimethylpyrazole, and acetoxime.

7. The colored layer-attached glass substrate according to claim 4, wherein a curing temperature of the thermal curing agent is 80°C to 200°C.

8. The colored layer-attached glass substrate according to claim 1, wherein the non-curable resin contains a tackifier.

9. The colored layer-attached glass substrate according to claim 2, wherein
the non-curable resin contains a tackifier, and
a content of the tackifier is more than 0 mass% and 150 mass% or less with respect to a content of the curable resin.

10. The colored layer-attached glass substrate according to claim 2, wherein the curable resin includes at least one selected from the group consisting of an acrylic resin, a polyester resin, and an epoxy resin.

11. The colored layer-attached glass substrate according to claim 2, wherein the curable resin includes an acrylic resin.

12. A colored layer-attached glass substrate comprising:
a glass substrate having a main surface; and
a colored layer disposed in contact with the main surface, wherein
an amount of a non-cured component extracted from the colored layer is 5 mass% or more and 40 mass% or less, as measured by using the following extraction test: (extraction test)
(i) an initial weight of the colored layer is measured;
(ii) the colored layer is immersed in an ethanol solution having a concentration of 99.5 vol% for 2 weeks, where the ethanol solution in which the colored layer is immersed is replaced once a day; and
(iii) a solid that is not dissolved in the ethanol solution is dried, then a weight of the dried solid is measured, and the amount of the non-cured component extracted is calculated by using the following equation: Amount [mass%] of non-cured component extracted = (initial weight [g] of colored layer - weight [g] of solid)/initial weight [g] of colored layer × 100.

13. The colored layer-attached glass substrate according to claim 12, wherein the amount of the non-cured component extracted from the colored layer is 10 mass% or more and 25 mass% or less.

14. The colored layer-attached glass substrate according to claim 12, wherein the amount of the non-cured component extracted from the colored layer is 10 mass% or more and 19 mass% or less.

15. The colored layer-attached glass substrate according to any one of claims 1 to 14, wherein the colored layer has a thickness of 5 µm to 20 µm.

16. The colored layer-attached glass substrate according to any one of claims 1 to 14, satisfying the following requirement 1 and requirement 2:
requirement 1: when the colored layer-attached glass substrate is immersed in boiling water under an atmospheric pressure and the colored layer-attached glass substrate is taken out after one hour of immersion, no peeling-off of the colored layer from the glass substrate is observed, and
requirement 2: when the colored layer-attached glass substrate is immersed in boiling water under an atmospheric pressure, and after one hour of immersion, a cross cut test in accordance with JIS K5600-5-6 is performed, no peeling-off of the colored layer from the glass substrate is observed, or a ratio of an area of a region peeled off from the glass substrate to a total area of the colored layer is 15% or less.

17. The colored layer-attached glass substrate according to any one of claims 1 to 14, wherein when the colored layer-attached glass substrate is observed from a glass substrate side, no air bubbles are observed between the glass substrate and the colored layer.

18. The colored layer-attached glass substrate according to any one of claims 1 to 14, wherein
the colored layer-attached glass substrate has an opening in which the colored layer is not disposed on the main surface of the glass substrate, and
a slope of an end portion of the colored layer adjacent to the opening is 0.1 or more.

19. The colored layer-attached glass substrate according to any one of claims 1 to 14, wherein at least a part of a region on the main surface where the colored layer is disposed is a curved surface.

20. A cover glass for a display, the cover glass comprising:
the colored layer-attached glass substrate according to any one of claims 1 to 14, wherein
the colored layer has an opening, and
at least one layer selected from the group consisting of an anti-glare layer, an anti-reflection layer, and an antifouling layer is laminated on a main surface of the glass substrate opposite to the main surface where the colored layer is disposed.

21. A display device comprising:
the cover glass according to claim 20; and
a display, wherein
a main surface of the cover glass on a colored layer side faces the display.

22. A method for producing a colored layer-attached glass substrate including a glass substrate having a main surface, and a colored layer disposed in contact with the main surface, the method comprising:
preparing the glass substrate having a main surface;
preparing a transfer member including a transfer substrate and a colored layer precursor film;
laminating the transfer member on the glass substrate such that the main surface of the glass substrate is in contact with the colored layer precursor film; and
curing the colored layer precursor film disposed in contact with the main surface of the glass substrate to form the colored layer, wherein
the colored layer precursor film contains a colorant, a curable resin, and a non-curable resin.

23. The method for producing a colored layer-attached glass substrate according to claim 22, wherein the colored layer precursor film further contains a curing agent.

24. The method for producing a colored layer-attached glass substrate according to claim 23, wherein the curing agent is a thermal curing agent,
after the transfer member is laminated on the glass substrate, the colored layer precursor film is heated at a temperature equal to or higher than a curing temperature of the thermal curing agent to cure the colored layer precursor film, and
the curing temperature of the thermal curing agent is 80°C to 200°C.

25. The method for producing a colored layer-attached glass substrate according to claim 23, wherein a content of the curing agent is 0.5 mass% to 30 mass% with respect to the colored layer precursor film.

26. The method for producing a colored layer-attached glass substrate according to any one of claims 23 to 25, wherein
the prepared glass substrate and the transfer member are installed in a chamber such that the main surface of the glass substrate faces the colored layer precursor film,
the chamber is divided by the transfer member into a first space including the glass substrate and a second space not including the glass substrate,
the transfer substrate is heated and softened, and
an air pressure in the first space is set lower than an air pressure in the second space to bring the colored layer precursor film into contact with the main surface of the glass substrate.

27. The method for producing a colored layer-attached glass substrate according to any one of claims 23 to 25, wherein a part of the colored layer disposed on the main surface of the glass substrate is irradiated with laser light to remove the colored layer irradiated with the laser light.
